# EUROPÄISCHE PATENTSCHRIFT

(11) **EP 0 766 326 B1**
(45) Veröffentlichungstag und Bekanntmachung des Hinweises auf die Patenterteilung: **12.04.2000**
(21) Anmeldenummer: 96116898.6
(22) Anmeldetag: 03.12.1993
(51) Int. Cl.: H01M 2/16, H01M 4/02

(54) **Elektrochemische Zelle und Verfahren zu ihrer Herstellung**
Electrochemical cell and process for producing the same
Cellule électrochimique et son procédé de fabrication

(30) Priorität: 08.12.1992 DE 4241276
(43) Veröffentlichungstag der Anmeldung: 02.04.1997
(62) Teilanmeldung aus: 94900760.3
(73) Patentinhaber: Hambitzer, Günther, 76327 Pfinztal (DE); Heitbaum, Joachim, D-61352 Bad Homburg (DE)
(72) Erfinder: Hambitzer, Günther, D-76327 Pfinztal (DE); Heitbaum, Joachim, 61352 Bad Homburg (DE)
(74) Vertreter: Pfeifer, Hans-Peter, Dr., Dr. H.-P. Pfeifer Dr. P. Jany, Patentanwälte

(56) Entgegenhaltungen:
- EP-A- 0 140 021
- EP-A- 0 523 840
- WO-A-92/00613
- WO-A-94/20246

## Beschreibung

Die Erfindung betrifft eine elektrochemische Lithiumzelle, insbesondere für wiederaufladbare Akkumulatoren mit mindestens einer eine Separatorschicht tragenden festen Elektrode. Weiter richtet sich die Erfindung auf ein Verfahren zur Herstellung einer solchen Zelle.

Elektroden für elektrochemische Zellen müssen hohe Anforderungen erfüllen. Insbesondere soll durch eine hohe Beweglichkeit der bei der Elektrodenreaktion gebildeten Spezies eine hohe Stromstärke ermöglicht werden. Ein besonderes Problem entsteht dadurch, daß die Einlagerung der gebildeten Spezies zu Volumenänderungen führt und daß der Elektrodenaufbau gewährleisten soll, daß trotz dieser Volumenänderungen eine hohe Lebensdauer, und eine hohe Zahl von Lade- und Entladezyklen erreicht werden kann.

Die Erfindung richtet sich insbesondere auf eine Separatorschicht für Elektroden. Sie ist insbesondere bei Verbundelektroden anwendbar, die - einschließlich eines Verfahrens zu ihrer Herstellung - in der internationalen Patentanmeldung WO 94/14202 und in dem daraus hervorgegangenen europäischen Patent 0673552 beschrieben werden. Diese Publikationen, aus denen die vorliegende Anmeldung als Teilanmeldung hervorgegangen ist, werden nachfolgend insgesamt als "Stammpatent" bezeichnet. Auf deren Inhalt wird in vollem Umfang Bezug genommen.

Die Erfindung ist auch in anderen Fällen einsetzbar, soweit die Elektroden keine organischen Bindemittel oder anderen organischen Substanzen enthalten, die durch hohe Temperaturen beeinträchtigt werden.

Bei Raumtemperatur betriebene Alkalimetall-Batterien besitzen üblicherweise Separatoren aus mikroporösen Kunststoffen, insbesondere Fluorkohlenwasserstoffpolymeren. Mit solchen Separatoren ergeben sich jedoch Stabilitätsprobleme, insbesondere hinsichtlich der chemischen Stabilität in Gegenwart von Lithium und Chlor. Es wurden zwar Versuche gemacht, solche Stabilitätsprobleme dadurch zu vermeiden, daß man zwischen die negative Lithiumelektrode und den Separator zusätzlich ein Glasfaservlies einbringt. Auch dadurch läßt sich jedoch keine befriedigende Betriebssicherheit erreichen.

Die Suche nach geeigneten Materialien und Konstruktionen für einen Separator ist mit erheblichen Problemen verbunden, weil an den Separator schwierige und teilweise kontroverse Anforderungen zu stellen sind.

Einerseits soll der Elektrolytwiderstand möglichst klein sein. Hieraus resultiert die Forderung nach einer möglichst großen Porosität des Separators. Andererseits führen jedoch große Poren beim Betrieb der elektrochemischen Zelle unter Stromfluß zu einer inhomogenen Konzentrationsverteilung der aktiven Spezies. Hierdurch wird bei Alkalimetall-Zellen die Abscheidung von Alkalimetall in Form von Dendriten beschleunigt. Insofern besteht der Wunsch nach einem kleinen Porendurchmesser, vorzugsweise kleiner als 1 µm.

An die chemische Stabilität werden hohe Anforderungen gestellt, weil in elektrochemischen Zellen vielfach stark reaktive Substanzen, wie beispielsweise Alkalimetalle, Halogene und deren Verbindungen verwendet werden müssen. Diese greifen teilweise sogar spezielle Polymermaterialien chemisch an, die an sich durch ihre chemische Resistenz bekannt sind. Schließlich sollte der Separator mechanisch so stabil sein, daß er auch unter Belastung nicht bricht und ein Durchwachsen von Alkalimetall-Dendriten verhindert.

Trotz dieser extremen Anforderungen sollte ein Separator dünn und leicht sein, um das Zellgewicht möglichst gering zu halten.

Diese Anforderungen werden erfindungsgemäß durch eine elektrochemische Zelle gemäß Anspruch 1 und durch ein Herstellungsverfahren gemäß Anspruch 4 erfüllt.

In der nicht vorpublizierten älteren europäischen Patentanmeldung 0523840 (Dokument nach Artikel 54(3)) wird eine Alkali-Mangan-Trockenzelle beschrieben, bei der eine poröse keramische Membran als Separator dient. Sie wird mittels eines Spincoating-Verfahren erzeugt.

Als glasbildende oder keramische Substanzen eignen sich Gläser, Kieselsole oder feuerfeste Oxide, wie Aluminiumoxid (z.B. als Mullit oder in Form von Fasern) oder Zirkonoxid, und dergl. Solche Stoffe sind chemisch sehr beständig. Durch eine Reihe verschiedener Maßnahmen beim Aufbringen und Glühen läßt sich die erforderliche Porosität der keramischen oder glasbildenden Substanz erzeugen.

Technologisch verhältnismäßig einfach ist es, die keramische oder glasbildende Substanz als Fasern oder als Pulver entsprechender Körnung (mittlerer Korndurchmesser typischerweise in der Größenordnung von 1 µm) aufzubringen und zusammenzusintern, wobei Temperatur und Dauer während des Sintervorgangs so bemessen werden, daß die Schicht eine ausreichende Mikroporosität behält. Dieser Glühvorgang erfolgt vorzugsweise in einer kontrollierten sauerstoffreduzierten Atmosphäre, d.h. in einer Atmosphäre mit einer im Vergleich zu Luft reduzierten Sauerstoffkonzentration. Insbesondere kann er in einer Inertgas-Atmosphäre, also unter praktisch vollständigem Ausschluß von Sauerstoff, erfolgen.

Alternativ kann man lösliche glasbildende oder keramische Substanzen auch in gelöster Form auftragen, wobei eine homogene Schicht gebildet wird, die sich beim Glühen zu einer chemisch stabilen Form umsetzt. Um dieser Schicht eine ausreichende Mikroporosität zu verleihen, kann man einen Stoff zusetzen, der nach dem Glühen, z.B. durch Waschen mit Wasser herausgelöst wird. Alternativ können auch Zuschlagstoffe verwendet werden, die beim Glühen in gasförmiger Form entweichen und dadurch die erforderliche Porosität erzeugen.

Bei den Lithiummetall-Zellen, auf die sich die Erfindung bezieht, sind die den Strom transportierende Spezies Lithiummetall-Ionen. Beide Elektroden und der Elektrolyt enthalten als elektrochemisch aktive Substanz Lithium. Dabei besteht in besonderem Maße das Problem, daß die Einlagerung der Lithiummetall-Ionen zu Volumenänderungen führt, denen der Elektrodenaufbau gewachsen sein muß.

Bei der Alkalimetall-Zelle gemäß dem Stammpatent wird die Elektrode als Verbundelektrode durch Glühen eines Elektroden-Basiskörpers in Kontakt mit einer anorganischen Verbindung des Alkalimetalles hergestellt. Der Elektroden-Basiskörper ist ein insgesamt festes, sich flächig erstreckendes (nicht pulverförmiges) Metallteil, dessen Form vor dem Glühen im wesentlichen der gewünschten Form der Elektrode entspricht. Durch den Glühvorgang entsteht eine unmittelbare Verbindung zwischen der aktiven Masse und dem diese tragenden Substrat. Allgemein hat der Elektroden-Basiskörper vorzugsweise eine große Flächenausdehnung und geringe Dicke, wie beispielsweise eine Folie, ein Blech oder ein Gitter.

Die Verbindung des Substrats und der von einem komplexen Metalloxid gebildeten aktiven Masse in dieser Verbundelektrode ist bindemittelfrei in dem Sinn, daß sie ohne ein zusätzliches organisches Bindemittel bewirkt wird. Vorzugsweise enthält die gesamte Elektrode im Benutzungszustand keinerlei organisches Bindemittel.

Bei dem Verfahren gemäß dem Stammpatent ist das Alkalimetall A Bestandteil einer Reaktionsmittelschicht, die in pulverförmiger oder flüssiger Form vor dem Glühen auf den Elektroden-Basiskörper (beispielsweise durch Sprühen, Tauchen oder Streichen) aufgetragen wird. Bevorzugt besteht die Reaktionsmittelschicht aus einer Suspension, welche die Alkalimetallverbindung in einer Konzentration enthält, die weit über ihrer Löslichkeit liegt, so daß in der Suspension feste Partikel der Alkalimetall-Verbindung enthalten sind. Es wurde festgestellt, daß trotz der notwendigerweise unregelmäßigen Struktur einer solchen Suspension beim Glühen eine ausreichend gleichmäßige und homogene Schicht des komplexen Metalloxids resultiert, welche sich einerseits durch eine sehr gute Festigkeit und Verbindung mit dem Substrat auszeichnet und andererseits durch eine mikroporöse Struktur die Einlagerung der Lithiumionen in das Wirtsgitter des Metalloxids erleichtert und dadurch hohe Stromstärken ermöglicht.

Das Glühen erfolgt vorzugsweise bei relativ hohen Temperaturen in der Größenordnung von 800 bis 1100°C. Vorzugsweise erfolgt das Glühen in sauerstoffhaltiger Atmosphäre, zweckmäßig an Luft.

In der elektrochemischen Zelle wird vorzugsweise ein anorganischer Elektrolyt auf Basis einer Komplexlösung von Lithiumtetrachloroaluminat (LiAlCl₄) in Schwefeldioxid (SO₂) in Verbindung mit einer Lithiumelektrode eingesetzt. Hierzu wird auf die EP-A-0357952 Bezug genommen.

Wichtige Vorteile solcher Zellen lassen sich wie folgt zusammenfassen:
- Die in Verbindung mit chloridhaltigen Elektrolyten an kohlenstoffhaltigen Elektroden festgestellte störende Chlorentwicklung wird fast vollständig vermieden, wie weiter unten noch näher erläutert wird.
- Die Herstellung ist verhältnismäßig einfach. Insbesondere wird das Krebsrisiko, welches mit der Verarbeitung sehr feingemahlener Pulver bei der konventionellen Elektrodenherstellung verbunden war, vermieden.
- Festigkeit und Leitfähigkeit sind besser, als bei den vorbekannten Elektroden, welche Teflon und Graphit enthalten.
- Dadurch, daß kein Teflon verwendet werden muß, ist die Möglichkeit zur Wiederverwendung (Recycling) besser.

Die Erfindung wird im folgenden anhand eines in den Figuren dargestellten Ausführungsbeispiels näher erläutert; es zeigen:
- Fig. 1 bis Fig. 3: den Herstellungsprozeß einer Verbundelektrode gemäß dem Stammpatent in drei verschiedenen Verfahrensstufen in perspektivischer Darstellung, teilweise im Schnitt;
- Fig. 4: eine elektrochemische Zelle in einer perspektivischen Darstellung, teilweise im Schnitt.

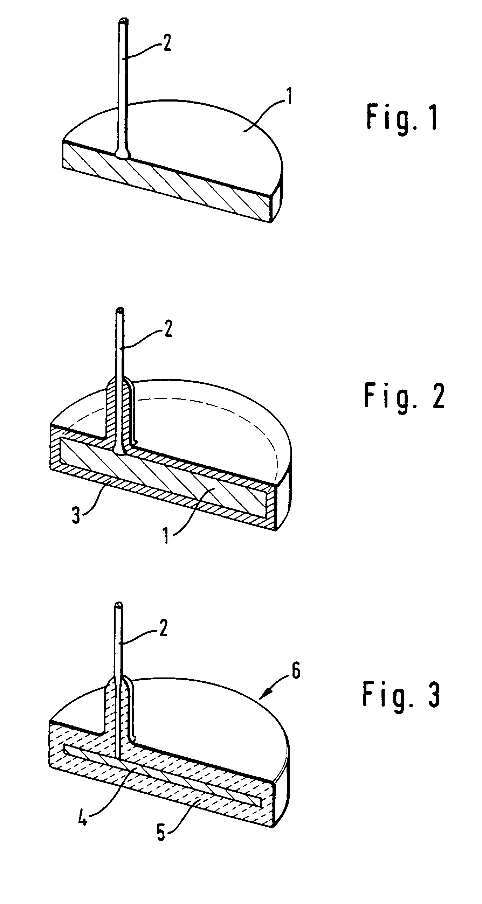

Fig. 1 zeigt einen zur Herstellung einer Verbundelektrode geeigneten Elektroden-Basiskörper 1, der aus dem Metall M besteht. Er hat im dargestellten Fall die Form einer kreisförmigen dünnen Platte. An dem Basiskörper 1 ist ein Metalldraht 2 durch Punktschweißen befestigt.

Auf den Elektroden-Basiskörper 1 wird eine Reaktionsmittelschicht 3 einer anorganischen Alkalimetallverbindung aufgetragen (Fig.2). Die Schicht 3 sollte den gesamten Basiskörper 1 und den Ansatz des Anschlußdrahtes 2 bedecken.

Der mit der Reaktionsmittelschicht 3 beschichtete Elektroden-Basiskörper 1 wird an Luft geglüht, wobei er zweckmäßigerweise an dem Draht 2 gehalten wird. Dabei reagiert die anorganische Alkalimetallverbindung A mit dem Metall M des Substrats unter Bildung des komplexen Metalloxids AₓM_{y}O_{z}. Das Ergebnis ist in Fig. 3 dargestellt. Es verbleibt ein Kern, der das (elektronisch leitende) Substrat 4 bildet und aus dem Metall M besteht. Er ist mit einer (ionisch leitenden) Schicht des komplexen Metalloxids (im Beispielsfall LiCoO₂) überzogen, die die aktive Masse 5 der Elektrode 6 bildet. Die relative Stärke des Substrats 4 einerseits und der Schicht 5 andererseits ist abhängig von der Temperatur und der Dauer des Glühvorgangs. Vorzugsweise sollte die Verbundelektrode 6 nahezu auf ihrer gesamten Fläche einen metallenen Kern aufweisen, weil hierdurch sowohl die mechanische Stabilität als auch die elektrischen Leitungseigenschaften verbessert werden. Die aktive Masse 5 ist kompakt und haftet gut auf dem elektronisch leitenden Untergrund.

Der metallische Elektroden-Basiskörper 1 kann selbstverständlich in verschiedenen äußeren Formen verarbeitet werden. Statt des dargestellten, aus einem Blech ausgestanzten plattenförmigen Basiskörpers kann - abhängig von der gewünschten Elektrodenform - auch ein Draht oder eine netzförmige Struktur verwendet werden. Vorzugsweise besteht der Elektroden-Basiskörper aus dem reinen Metall M oder aus einer Legierung von Übergangsmetallen (insbesondere Metallen mit den Ordnungszahlen 22 bis 28). Der Anteil sonstiger Beimischungen sollte gering (kleiner als 10 %) sein.

Auch für das Aufbringen der Reaktionsmittelschicht sind verschiedene Verfahren möglich. Die Konzentration der anorganischen Alkalimetallverbindung sollte erheblich höher als die Löslichkeitsgrenze liegen. Sie kann beispielsweise in Form einer wässrigen Suspension oder einer Schmelze verwendet werden, die auf den Elektroden-Basiskörper (z.B. durch Sprühen) aufgetragen oder in die der Elektroden-Basiskörper eingetaucht wird.

Die anorganische Alkalimetallverbindung wird vorzugsweise in definierter Menge aufgebracht. Der Grad der Umsetzung läßt sich durch diese Menge sowie die Zeitdauer und die Temperatur des Glühens festlegen, wobei die Glühdauer in Abhängigkeit von der Dicke der Reaktionsmittelschicht in einem weiten Bereich zwischen etwa einer Minute und einer Stunde variieren kann. Die für eine ausreichende Schichtdicke der aktive Masse erforderliche Glühdauer hängt auch stark von dem Übergangsmetall M ab. Beispielsweise wird Kobalt erheblich schneller als Nickel umgesetzt.

Wenn zur Herstellung einer Elektrode mit verhältnismäßig großer Elektrodenmasse eine große Menge an Alkalimetall-verbindung aufgebracht werden muß, kann der Vorgang (Auftragen des Reaktionsmittels, Glühen) einmal oder mehrfach wiederholt werden. Im Falle eines homogenen Basiskörpers aus dem Übergangsmetall M bzw. einer das Übergangsmetall M enthaltenden Legierung wird der Prozeß abgebrochen, wenn der ursprüngliche Substratkörper weitgehend, aber noch nicht vollständig, umgesetzt ist. Bevorzugt wird der ursprüngliche Substratkörper zu maximal etwa 95% umgesetzt.

Dem Alkalimetall-haltigen Salz kann in geringer Konzentration von weniger als 5 % ein anderes Metallsalz, insbesondere ein Salz des Aluminium, Bor oder Zinn zugesetzt sein, um die Leitfähigkeit der beim Glühen gebildeten aktiven Masse zu erhöhen (US-Patent 4,668,595).

Der Elektroden-Basiskörper 1 kann auch mehrschichtig ausgebildet sein, wobei nur die oberste Schicht das Übergangsmetall M des komplexen Metalloxids enthält. In diesem Fall wird vorzugsweise die gesamte das Metall M enthaltende Schicht umgesetzt.

Ein nach dem Glühen verbleibender Überschuß der Alkalimetallverbindung wird durch Waschen (beispielsweise mit Wasser oder verdünnter Säure) entfernt.

Die mechanische Stabilität der Elektrode kann dadurch erhöht werden, daß im Anschluß an das Glühen in einem zusätzlichen Verfestigungsschritt eine festigkeitserhöhende anorganische Substanz aufgebracht und ein weiteres Mal geglüht wird. Ebenso wie bei der weiter oben erwähnten Erzeugung einer Separatorschicht wird auch hier vorzugsweise in einer kontrollierten sauerstoffreduzierten Atmosphäre geglüht.

Als festigkeitserhöhende Substanz eignen sich insbesondere die oben zur Herstellung der Separatorschicht bereits erwähnten glasbildenden oder keramischen Substanzen, wie Kieselsole, Gläser und Aluminiumoxid sowie Mischungen daraus. Es kann zweckmäßig sein, zusätzlich eine anorganische Verbindung des Alkalimetalls zuzusetzen, wobei grundsätzliche die gleichen Verbindungen wie bei der Herstellung der komplexen Metallverbindung geeignet sind. Die Gemische können trocken oder als wässrige Lösung oder Suspension aufgebracht werden, wobei zur Erniederung der Oberflächenspannung ein Tensid zugesetzt werden sollte. Der Auftrag kann wiederum durch Bestreichen, Besprühen oder Tauchen erfolgen. Die Temperatur bei dem zweiten Glühvorgang ist vorzugsweise höher als beim ersten Glühvorgang (1100°C ist ein typischer Wert) während die Zeitdauer des zweiten Glühvorgangs vorzugsweise erheblich kürzer ist als die des ersten Glühvorgangs und typischerweise weniger als 10 Minuten beträgt.

Die Nachbehandlung der Verbundelektroden mit einer festigkeitserhöhenden Substanz verbessert nicht nur die mechanische Festigkeit, sondern führt in dem besonders bevorzugten Anwendungsfall in Verbindung mit einer chloridhaltigen Elektrolytlösung auch zu einer Verminderung der Chlorentwicklung.

Die Bildung von Chlor an der positiven Elektrode ist bei einer Zelle, deren Elektrolyt Chlorid enthält und die bei einer sehr hohen Zellspannung arbeitet, insbesondere dem in der EP-A-0 357 952 beschriebenen System Li|LiAlCl₄ ∗ SO₂|LiCoO₂ eine Nebenreaktion, die einerseits positive und andererseits negative Effekte hat.

Einerseits bildet sie einen wirksamen Überladungsschutz. Das an der positiven Elektrode gebildete Chlorgas löst sich in dem Elektrolyt und wandert zu der negativen Lithiumelektrode, wo sich die Ausgangssubstanz Lithiumchlorid bildet. Dadurch wird oberhalb einer Grenzspannung der Ladestrom von einer Nebenreaktion verbraucht, die zu keinem Nettoeffekt führt.

Andererseits findet aufgrund der thermodynamischen Verhältnisse diese Reaktion auch im normalen Betriebsspannungsbereich des Elementes (bei dem genannten System im Spannungsbereich oberhalb von etwa 4,3 Volt) in praktisch nennenswertem Umfang statt. Sie bildet dadurch eine störende Selbstentladungsreaktion. Es ist deshalb wichtig, die Chlorentwicklung auf ein praktisch nicht mehr störendes Maß zu reduzieren. Dies gelingt durch den genannten Verfestigungsschritt.

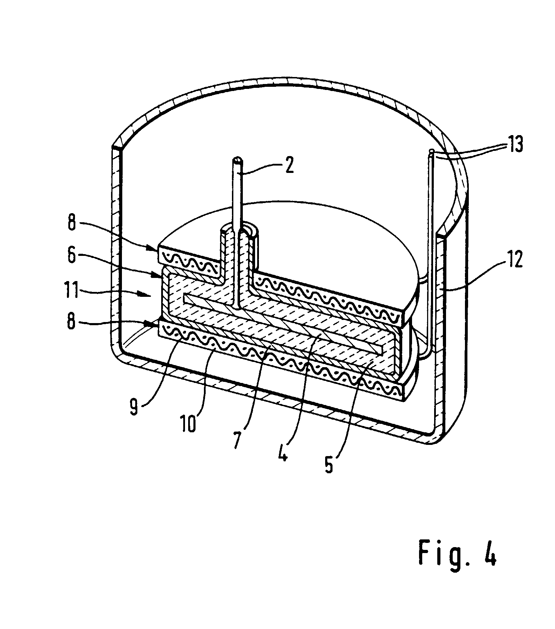

Fig. 4 zeigt den unteren Teil einer erfindungsgemäßen elektrochemischen Zelle. Die Verbundelektrode 6 ist mit einer Separatorschicht 7 überzogen, an welche sich auf beiden Seiten der (positiven) Verbundelektrode 6 eine negative Elektrode 8 anschließt, so daß ein insgesamt sandwichartiger Aufbau entsteht. Die negativen Elektroden 8 bestehen jeweils aus einem Traggitter 9 und dem darauf aufgepreßten Alkalimetall 10.

Die insgesamt mit 11 bezeichnete Elektroden-Sandwichkonstruktion befindet sich in einem Behälter 12 aus Glas oder einem geeigneten inerten Metall, von dem in der Figur nur der untere Teil dargestellt ist. Ebenfalls nur andeutungsweise dargestellt ist der elektrische Anschluß, der über den Draht 2 bzw. an der negativen Elektrode angeschlossene Drähte 13 erfolgt.

Die Erfindung wird im folgenden anhand von Beispielen noch näher erläutert, wobei sich Beispiel 1 auf den Gegenstand des Stammpatentes bezieht.

### Beispiel 1:

Eine Verbundelektrode wurde in der auf Basis der Figuren 1-3 erläuterten Art und Weise hergestellt. Als Elektroden-Basiskörper diente ein Kobaltblech von 0,1 mm Stärke und 10 mm Durchmesser. Es wurde mit einer Reaktionsmittelschicht in Form einer Suspension von Lithiumcarbonat (80 Gew. % in Wasser) mit einer Menge von 20 mg Lithiumcarbonat pro cm² beschichtet. Anschließend wurde an Luft bei 900°C ca. eine Stunde geglüht.

Die resultierende Kobalt-Lithiumkobaltoxid-Verbundelektrode wurde mit verdünnten Säuren gewaschen und in eine Versuchszelle, deren Aufbau im wesentlichen Fig. 4 entsprach, eingebaut. Die aktive Masse der negativen Elektrode war Lithium. Als Elektrolytlösung wurde LiAlCl₄ ∗ SO₂ mit einem Äquivalenzverhältnis von 1:3 eingesetzt.

Die so hergestellte Elektrode zeigte beim Laden bis 4,5 V (entsprechend einem Ladezustand von ca. 85%) und Entladen bis 3,5 V eine Kapazität von 13 mAh je cm² Elektrodenfläche.

### Beispiel 2:

Um die Festigkeit der Elektrode und ihre Beständigkeit gegen die beim Laden und Entladen auftretenden Volumenänderungen zu erhöhen und gleichzeitig die Chlorentwicklung, welche oberhalb von 4,3 V in verstärktem Maß beobachtet wurde, zu reduzieren, wurde die gemäß Beispiel 1 hergestellte Verbundelektrode mit einer wässrigen Paste eines hitzebeständigen Glaspulvers (DURAN, Hersteller Fa. Schott aus Mainz, Bundesrepublik Deutschland) mit einem mittleren Partikeldurchmesser von 7µm und 1% Polyethylenglykol (als Tensid) bestrichen. Die Gewichtszunahme der getrockneten Elektrode betrug ca. 10 mg/cm². Danach wurde für 3 Minuten bei 1100°C geglüht und anschließend in kochendem Wasser gewaschen und getrocknet.

Auf diese Weise wurde auf der Elektrode eine Separatorschicht erzeugt, die sich durch hohe chemische Beständigkeit und mechanische Festigkeit auszeichnet. Ein Kurzschluß durch die bei hoher Zyklenzahl entstehenden Lithiumdendriten wird dadurch weitgehend verhindert.

Zugleich wird eine sehr hohe Leistungsdichte erreicht. Es wurde eine Strombedeckung (früher übliche Bezeichnung "Stromdichte") von 10 mA/cm² bei 3,1 V gemessen.

### Beispiel 3:

Die Experimente gemäß Beispiel 2 wurden wiederholt, wobei jedoch die Viskosität durch Erhöhung der Polyethylenglykol-Konzentration auf 5% und Zusatz von 10fach verdünnter Kieselsol, auf einen Wert eingestellt wurde, der das Aufbringen der Reaktionsmittelschicht durch Eintauchen ermöglicht. Die Ergebnisse waren ähnlich dem vorhergehenden Beispiel.

## Patentansprüche

1. Elektrochemische Lithiumzelle mit mindestens einer festen Elektrode (6), **dadurch gekennzeichnet**, daß die Elektrodenoberfläche eine durch Aufbringen einer keramischen oder glasbildenden Substanz und Glühen gebildete, durchgängig feinporöse Separatorschicht (7) aufweist.

2. Elektrochemische Lithiumzelle nach Anspruch 1, **dadurch gekennzeichnet**, daß die glasbildende oder keramische Substanz ein Glas, ein Kieselsol oder ein feuerfestes Oxid enthält.

3. Elektrochemische Lithiumzelle nach Anspruch 2, **dadurch gekennzeichnet**, daß das feuerfeste Oxid Aluminiumoxid oder Zirkonoxid ist.

4. Verfahren zur Herstellung einer elektrochemischen Lithiumzelle mit mindestens einer festen Elektrode (6) und einer darauf befindlichen Separatorschicht (7), **dadurch gekennzeichnet**, daß man zur Herstellung der Separatorschicht (7) auf die Elektrodenoberfläche eine keramische oder glasbildende Substanz derartig aufbringt und glüht, daß sich eine durchgängige, feinporöse Deckschicht auf der Elektrodenoberfläche bildet und die Elektrode (6) in die elektrochemische Lithiumzelle einbaut.

5. Verfahren nach Anspruch 4, **dadurch gekennzeichnet**, daß die glasbildende oder keramische Substanz ein Glas, ein Kieselsol oder ein feuerfestes Oxid enthält.

6. Verfahren nach Anspruch 5, **dadurch gekennzeichnet**, daß das feuerfeste Oxid Aluminiumoxid oder Zirkonoxid ist.

7. Verfahren nach einem der Ansprüche 4 bis 6, **dadurch gekennzeichnet**, daß die keramische oder glasbildende Substanz in Form von Fasern aufgebracht wird.

8. Verfahren nach einem der Ansprüche 4 bis 7, **dadurch gekennzeichnet**, daß die keramische oder glasbildende Substanz als Pulver aufgebracht wird.

9. Verfahren nach einem der Ansprüche 4 bis 8, **dadurch gekennzeichnet**, daß die keramische oder glasbildende Substanz in gelöster Form aufgebracht wird.

## Claims

1. Electrochemical lithium cell with at least one solid electrode (6), characterized in that the surface of the electrode comprises a continuous finely porous separator layer (7) formed by applying a ceramic or vitrifying substance and by heating.

2. Electrochemical lithium cell according to claim 1, characterized in that the ceramic or vitrifying substance comprises a glass, a silica sol or a refractory oxide.

3. Electrochemical lithium cell according to claim 2, characterized in that the refractory oxide is aluminum oxide or zirconium oxide.

4. Process for manufacture of an electrochemical lithium cell with at least one solid electrode (6) and a separator layer (7) thereon, characterized in that the separator layer (7) is formed in that a ceramic or vitrifying substance is applied to the surface of the electrode and heated to form a continuous finely porous surface layer on the surface of the electrode and in that the electrode (6) is incorporated in the electrochemical lithium cell.

5. Process according to claim 4, characterized in that the vitrifying or ceramic substance comprises a glass, a silicon sol or a refractory oxide.

6. Process according to claim 5, characterized in that the refractory oxide is aluminum oxide or zirconium oxide.

7. Process according to one of claims 4 to 6, characterized in that the ceramic or vitrifying substance is applied in the form of fibres.

8. Process according to one of claims 4 to 7, characterized in that the ceramic or vitrifying substance is applied as a powder.

9. Process according to one of claims 4 to 8, characterized in that the ceramic or vitrifying substance is applied in dissolved form.

## Revendications

1. Cellule électrochimique au lithium avec au moins une électrode solide (6), caractérisée en ce que la surface de l'électrode présente une couche de séparateur (7) à pores fins interconnectés, formée par l'application d'une substance céramique ou formatrice de verre et par chauffage à incandescence.

2. Cellule électrochimique au lithium suivant la revendication 1, caractérisée en ce que la substance formatrice de verre ou céramique comporte un verre, un sol de silice ou un oxyde réfractaire.

3. Cellule électrochimique au lithium suivant la revendication 2, caractérisée en ce que l'oxyde réfractaire est de l'oxyde d'aluminium ou de l'oxyde de zirconium.

4. Procédé de fabrication d'une cellule électrochimique au lithium avec au moins une électrode solide (6) et une couche de séparateur (7) située sur cette dernière, caractérisé en ce que, pour la préparation de la couche de séparateur (7), une substance céramique ou formatrice de verre est appliquée sur la surface de l'électrode et chauffée à incandescence, de sorte qu'il se forme une couche de couverture à pores fins interconnectés sur la surface de l'électrode, et l'électrode (6) est montée dans la cellule électrochimique au lithium.

5. Procédé suivant la revendication 4, caractérisé en ce que la substance formatrice de verre ou céramique comporte un verre, un sol de silice ou un oxyde réfractaire.

6. Procédé suivant la revendication 5, caractérisé en ce que l'oxyde réfractaire est de l'oxyde d'aluminium ou de l'oxyde de zirconium.

7. Procédé suivant l'une des revendications 4 à 6, caractérisé en ce que la substance céramique ou formatrice de verre est appliquée en forme de fibres.

8. Procédé suivant l'une des revendications 4 à 7, caractérisé en ce que la substance céramique ou formatrice de verre est appliquée sous forme de poudre.

9. Procédé suivant l'une des revendications 4 à 8, caractérisé en ce que la substance céramique ou formatrice de verre est appliquée sous forme dissoute.
